# EUROPEAN PATENT APPLICATION

(11) **EP 3 587 284 A1**
(43) Date of publication of application: **01.01.2020**
(21) Application number: 19180956.5
(22) Date of filing: 18.06.2019
(51) Int. Cl.: B65B 21/18, B65G 57/03, B65G 57/24

(54) **EQUIPMENT AND METHOD FOR THE PACKAGING OF OBJECTS**

(30) Priority: 27.06.2018 IT 201800006715
(71) Applicant: Zecchetti S.R.L., 42027 Montecchio Emilia (Reggio Emilia) (IT)
(72) Inventor: ROCCHETTA, Paolo, 42019 SCANDIANO (RE) (IT); PIZZINI, Stefano, 42043 TANETO DI GATTATICO (RE) (IT)
(74) Representative: Corradini, Corrado

(57) **Abstract**

An equipment (100) and a method for the packaging of objects (B) are described, wherein the equipment comprises: a resting surface (140) for a partition grid (G) defining a plurality of containment cavities (H) having axes orthogonal to the resting surface (140); a centering device (105) positioned above the resting surface (140) and provided with a plurality of guide channels (110) having axes orthogonal to the resting surface (140); first movement members (145) adapted to move said centering device (105) in a direction parallel to the resting surface (140), so as to be able to align each guide channel (110) with a corresponding containment cavity (H) of the partition grid (G); and handling members (185) suitable for inserting an object (B) to be packed inside each guide channel (110) of the centering device (105), until it is inserted and released inside the corresponding containment cavity (H) of the partition grid (G).

## Description

### Field of the invention

The present invention relates to an equipment and a method for the packaging of objects, typically objects made of glass, ceramic or any other fragile material, for example jars, glasses and especially, but not exclusively, bottles. More in particular, the present invention relates to an equipment and to a method that can be used within a palletization process, i.e. a process that allows to position in an orderly manner the aforesaid objects over a pallet, for example to be able subsequently to transport and/or to store them.

### State of the art

As is well known, glass bottles are normally palletized in superposed layers, where each "layer" consists of a plurality of bottles arranged coplanar and mutually side by side according to an arrangement in parallel rows.

On each layer is generally set down a separation plane, typically made of cardboard or plastic material, on which the subsequent layer is set down, until completing a stack that can lastly be stabilised by winding with an extensible film.

Depending on the methods used, each layer can be formed directly on the pallet, for example on the last separation plane that covers the previous layer, or it can be preformed on a preparation table and subsequently transported as a whole on the pallet. In both cases, the layer is commonly formed by means of an equipment that comprises a working head provided with gripping members adapted to grip one or more rows of bottles that are placed in a position of loading from a transport line.

The equipment further comprises a movement apparatus, for example an industrial robot, which is able to move the working head between the loading position and a releasing position, in which the gripping members release the rows of bottles on the preparation table or directly on the pallet as explained above.

Repeating this operating cycle several times, the working head is then able to form progressively on the pallet, or on the preparation table, a layer that can consist of any pre-set number of bottles.

However, there are some types of bottles that, because of their intrinsic fragility or simply to satisfy particular aesthetic requirements, have to be palletized so that they cannot touch each other.

To meet this need, a known method is to apply to each layer of bottles a partition grid (commonly known as "alveolar separator"), which can be made of cardboard or plastic material and makes available a plurality of containment cavities individually able to house a respective bottle of the layer.

Currently, this partition grid is applied, in a manual or automated way, after the working head has completed the forming of the layer on the pallet or on the preparation table.

In practice, the partition grid is lowered from above on the already formed layer of bottles, causing each bottle to be inserted inside a respective containment cavity.

This insertion is generally facilitated by the sloping shoulders of most bottles which, acting substantially as a cam profile for the walls of the partition grid which delimit the containment cavities, can transform the vertical movement of the partition grid into slight transverse displacements of the bottles or of the partition grid, thus allowing to correct the small positioning errors that can arise during the formation of the layer. However, some types of bottles sometimes have a rather square shape with nearly flat and horizontal shoulders that do not allow this type of centering.

On the contrary, if the bottles of the layer are not positioned in an extremely precise way, it may happen that the walls of the partition grid that delimit the containment cavities rest on the flat shoulders of some of these bottles, preventing the mutual coupling and/or causing the partition grid to be damaged (e.g., ripped).

### Description of the invention

In light of the above, an object of the present invention is to provide an equipment and a method that allow to overcome the aforementioned drawback of the prior art. An additional object is to achieve the aforesaid purpose within the scope of a simple, rational and possibly low-cost solution.

These and other objects are reached thanks to the characteristics of the invention as set forth in the independent claims. The dependent claims outline preferred or advantageous aspects of the invention which however should not be construed as limiting. In particular, an embodiment of the present invention makes available an equipment for the packaging of objects, typically but not exclusively for bottles, which comprises:
- a resting surface (for example horizontal) for a partition grid defining a plurality of containment cavities having axes orthogonal to the resting surface (for example vertical),

- a centering device arranged above the bearing surface and provided with a plurality of guide channels having axes orthogonal to the bearing surface (for example vertical),
- first movement members adapted to move said centering device in a direction parallel to the resting surface, so as to be able to align each guide channel with a corresponding containment cavity of the partition grid, and
- handling members suitable for inserting an object to be packed inside each guide channel of the centering device, until it is inserted and released inside the corresponding containment cavity of the partition grid.

Thanks to this solution, differently from the prior art, the layer of objects is directly formed inside the partition grid and the insertion of the objects is stably guided by the centering device, whose guide channels ensure that the objects are inserted in the containment cavities securely and without interfering with the walls of the partition grid.

In some embodiments of the invention, the resting surface can be a surface of a pallet.

In this way, the layer of objects with the related partition grid can be formed directly on the pallet, obtaining an equipment able to carry out a complete palletization process with relatively small dimensions and costs.

In other embodiments, the resting surface can be a surface of a supporting table (e.g. a preparation table).

In this way, the layer of objects with the related partition grid can be preformed on the supporting table and subsequently transferred as a whole on the pallet, separating the two process steps and hence obtaining a potentially more versatile equipment. According to an aspect of the invention, the equipment can comprise second movement members adapted to move the centering device in a direction orthogonal to the resting surface.

This aspect achieves multiple positive effects. In the first place, it allows to regulate the distance between the centering device and the partition grid, allowing the equipment to operate with partition grids having different thicknesses according to the format of the objects to be packed. In some embodiments, the aforesaid movement of the centering device can also allow to insert axially at least one portion of each guide channel inside the corresponding containment cavity of the partition grid, effectively increasing the certainty that each object is precisely inserted in the corresponding containment cavity. In other embodiments, for example those that provide for the resting surface to be made directly available from a pallet, the movement of the centering device in an orthogonal direction can also allow to form a stack of superposed layers on the resting surface.

According to another aspect of the invention, each guide channel of the centering device can comprise a tapered portion that narrows towards the resting surface.

Thanks to this solution, the handling members can more easily insert the objects to be packed inside the guide channels of the centering device, which are then effectively able to guide them laterally in alignment with the corresponding containment cavities of the partition grid. Moreover, especially in the embodiments in which the guide channels are partially inserted in the containment cavities of the partition grid, the tapered shape of the guide channels facilitates the aforesaid insertion and prevents any damages to the walls of the partition grid due for example to an imperfect alignment with the centering device.

According to another aspect of the invention, the tapered portion of each guide channel is defined by at least one yielding wall, for example elastically flexible.

Preferably, the tapered portion of each guide channel can be defined by a plurality of yielding walls radially arranged about the axis of the corresponding guide channel.

In this way, the tapered portion of each guide channel can advantageously open or spread during the insertion of an object, allowing that object to pass inside the corresponding containment cavity of the partition grid.

In more detail, in an embodiment of the present invention the first movement members can comprise:
- a trolley adapted to carry the centering device,
- a frame suitable for carrying the trolley, and
- actuating members adapted to actuate the trolley so as to make it move relative to the frame in a direction parallel to the resting surface.

In this way, the positioning of the centering device with respect to the partition grid can be obtained through a relatively simple and economical solution.

According to an aspect of this embodiment, the second movement members can comprise:
- a fixed support structure to which the frame is coupled, and
- actuating members adapted to actuate the frame so as to make it move relative to the support structure in a direction orthogonal to the resting surface.

In this way, the movements of the centering device towards and away from the partition grid can be obtained through a relatively simple and economical solution. According to another aspect of this embodiment, the frame can comprise at least two parallel longitudinal members, lying in a common plane substantially parallel to the resting surface and mutually spaced apart.

In this way, between the two longitudinal members of the frame there remains defined a space able to house the partition grid that is on the resting surface, realising a rather compact equipment with small bulk.

The trolley can comprise two units individually coupled to a respective longitudinal member of the frame, which units support the centering device in the space between the two longitudinal members.

Thanks to this solution, the centering device can be easily carried above the partition grid that is located on the underlying resting surface.

However, in other embodiments, the first and/or the second movement members of the centering device can be realised in a different way from the one outlined above, for example through a single apparatus (such as an industrial robot with anthropomorphic arm or otherwise) which is able to carry the centering device and to make it effect movements both in a direction parallel and in an orthogonal direction to the resting surface of the partition grid.

According to another aspect of the embodiment outlined above, the equipment can also comprise third movement members able to move the centering device with respect to the trolley in an orthogonal direction to the resting surface.

These third movement members can be useful for example to insert and remove the guide channels of the centering device in the containment cavities of the partition grid, without having to move the entire frame, saving time and energy.

According to a different aspect of the invention, the handling members able to insert the objects to be packed can comprise an operating head provided with a plurality of gripping device individually able to releasably hold a corresponding object to be packed and a movement apparatus able to move said operating head.

In this way, the operating head can effectively be used to pick up the objects from a loading position, in which the objects can be for example positioned by one or more transport lines, and to transfer them to the centering device.

The movement apparatus of the operating head can be an industrial robot, for example an anthropomorphic robot or a Cartesian robot.

In addition to the equipment outline above, the invention also makes available a corresponding method for the packaging of objects, typically but not exclusively for bottles, which comprises the steps of:
- preparing a partition grid defining a plurality of containment cavities having axes parallel to each other,
- overlapping the partition grid with a centering device provided with a plurality of guide channels having axes parallel to each other,
- positioning the centering device so that each guide channel is aligned with a corresponding containment cavity of the partition grid,
- inserting an object to be packed inside each guide channel of the centering device, until it is inserted inside the corresponding containment cavity of the partition grid,
- releasing each object to be packed inside the corresponding containment cavity of the partition grid, and
- moving the centering device away from the partition grid.

This embodiment of the invention achieves substantially the same effects as the equipment, in particular that of forming the layer of objects directly inside the partition grid, assuring that the objects are inserted in the containment cavities securely and without interfering with the walls of the partition grid.

All the ancillary aspects described previously with reference to the equipment are understood to be applicable to the method as well.

In particular, the method can comprise axially inserting at least one portion of each guide channel of the centering device inside the corresponding containment cavity of the partition grid.

Each guide channel can also have at least one tapered portion, which may be delimited by one or more yielding walls, for example elastically flexible.

According to an aspect of the method, the centering device can have a number of guide channels lower than the number of containment cavities of the partition grid and, following the release step, the method can provide for repositioning the centering device so as to align each guide channel with a further corresponding containment cavity and subsequently repeat the insertion and release steps.

Thanks to this solution it is advantageously possible to load the objects in partitions grids of different dimensions and it is also advantageously possible to use a centering device having small dimensions that contributes to reduce the bulk of the equipment.

As stated above in relation to the apparatus, the method can provide for the partition grid to be positioned directly on a pallet, for example in contact with the pallet or on other elements, for example other layers of objects, already positioned on the pallets. Alternatively, the partition grid can be positioned on a preparation table and, after moving away the centering grid, the method can provide for picking up from the preparation table the assembly comprising the partition grid and the objects positioned inside the containment cavities and to transfer it on a pallet.

### Brief description of the drawings

Further features and advantages of the invention will be more apparent after reading the following description provided by way of a non-limiting example, with the aid of the accompanying drawings.
Figure 1 is a side view of a partition grid.
Figure 2 is a portion of the section II-II indicated in figure 1.
Figure 3 is a side view of a centering device according to an embodiment of the present invention.
Figure 4 is the section IV-IV of figure 3 shown in enlarged scale.
Figure 5 is a portion of the section V-V indicated in figure 4.
Figure 6 is a view of an equipment for palletizing objects according to a first embodiment of the present invention.
Figure 7 is the section VII-VII indicated in Figure 6.
Figures 8 to 15 are figure 6 in reduced scale and shown in as many different instants during the operation of the equipment.
Figure 16 is a view of an equipment for palletizing objects according to a second embodiment of the present invention.
Figure 17 is the section XVII-XVII indicated in figure 16.
Figures 18 to 23 are figure 17 in reduced scale and shown in as many different instants during the operation of the equipment.

### Detailed description

With the aid of the aforementioned figures, two embodiments are described hereafter for an equipment 100 able to implement a palletization method for bottles B, typically for glass bottles.

However, the same equipment 100 and the same method can be used to palletize other types of objects, typically but not only made of glass, ceramic or any other fragile material, for example jars, glasses or other products.

The palletization method of the invention generally has to purpose of stacking on a pallet P a plurality of "layers" of bottles B, where each "layer" comprises a plurality of bottles B arranged mutually coplanar and distributed in parallel rows, substantially according to a matrix or checkerboard arrangement.

In particular, the method provides for associating to each "layer" of bottles B a grating or partition grid G, commonly also known as "alveolar separator", whose main function is to maintain each bottle B of the "layer" laterally contained and separate from the bottles B adjacent thereto, so as to avoid breakages or damages due to mutual contacts or rubbing between the bottles B.

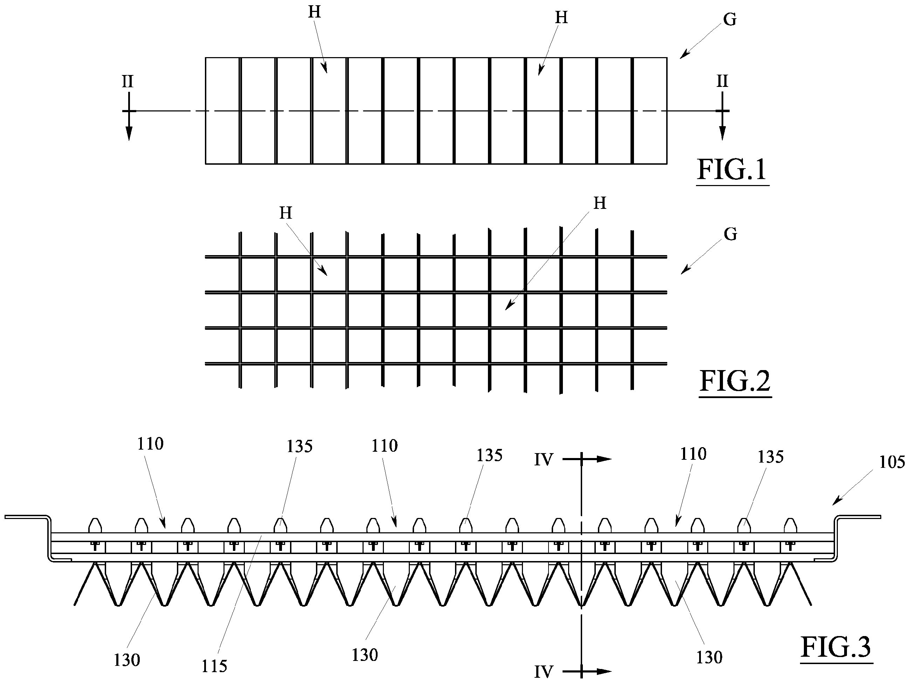

As shown in figures 1 and 2, the partition grid G can be shaped substantially as a panel, generally flat or planar, which has a plurality of containment cavities H that extend in a through manner in the direction of the thickness of the panel, according to mutually parallel axes.

The containment cavities H can have substantially prismatic shape, for example with square or rectangular cross section, but without excluding the possibility of other shapes.

The partition grid G can be made of a cellulose-based material, for example cardboard, or of a plastic material, for example made of polyethylene or polypropylene. According to the method of the invention, the bottles B of each "layer" can be individually inserted inside a respective containment cavity H of the partition grid G, so that each of them is laterally distanced and separate from the others, thanks to the interposition of the walls (made of cardboard, plastic or other material) of the partition grid G that delimit the respective containment cavity H.

To allow this insertion, the equipment 100 is generally provided with a centering device 105, which comprises a plurality of guide channels 110 individually able to guide each bottle B inside the respective containment cavity H.

To contain the bulk of the equipment 100, the number of guide channels 110 can be lower than the number of the containment cavities H of the partition grid G.

The guide channels 110 of the centering device 105, which can extend according to mutually parallel axes, are preferably arranged mutually adjacent and substantially coplanar.

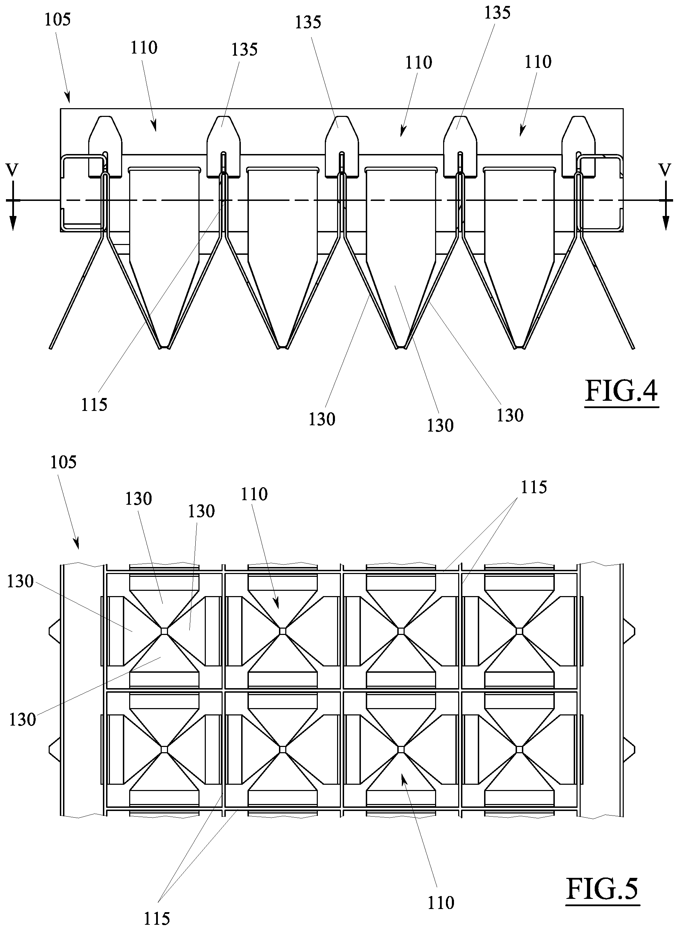

According to the example illustrated in figures 3-5, the centering device 105 can comprise a grating framework 115, substantially flat or planar, for example rectangularly shaped, whose meshes define a plurality of through openings in the direction of its thickness.

The grating framework 115 can be made of metallic material and its meshes can have rectangular or square shape.

However, in other embodiments, the grating framework 115 can be made of other materials and/or the shape of its meshes can be different.

Each guide channel 110 can be defined inside a respective mesh, so that its axis is substantially orthogonal to the plane of lay of the grating framework 115.

In particular, each guide channel 110 can be delimited by a plurality of lateral walls 130, which are fixed to the grating framework 115 at the respective mesh, preferably in such a way as to project axially therefrom (all from the same side).

In the illustrated example, in which the meshes of the grating framework 115 have rectangular/square shape, each guide channel 110 can be delimited by four lateral walls 130 that are fixed to the side of the respective mesh.

However, in other embodiments, the lateral walls 130 can be fixed at the corners of the respective mesh and/or they can be in a different number.

In any case, it is preferable for the lateral wall 130 of each guide channel 110 to extend in an inclined way and mutually converging with respect to the axis of the respective mesh, to give to the projecting portion of the guide channel 110 a substantially tapered shape that narrows as it moves away from the grating framework 115.

It is also preferable for the lateral walls 130 to be yielding, so that they can spread at the passage of a bottle B, moving away from each other in radial direction with respect to the axis of the respective guide channel 110.

For this purpose, the lateral walls 130 can be elastically yielding, for example they can be made as thin laminas of plastic material or of harmonic steel.

At the opposite side with respect to the projecting portions of the guide channels 110, the grating framework 115 can also comprise a plurality of rubber bodies 135, for example with conical shape, which are fixed at the corners of each mesh to promote and make more secure the access of the bottles B to the guide channels 110.

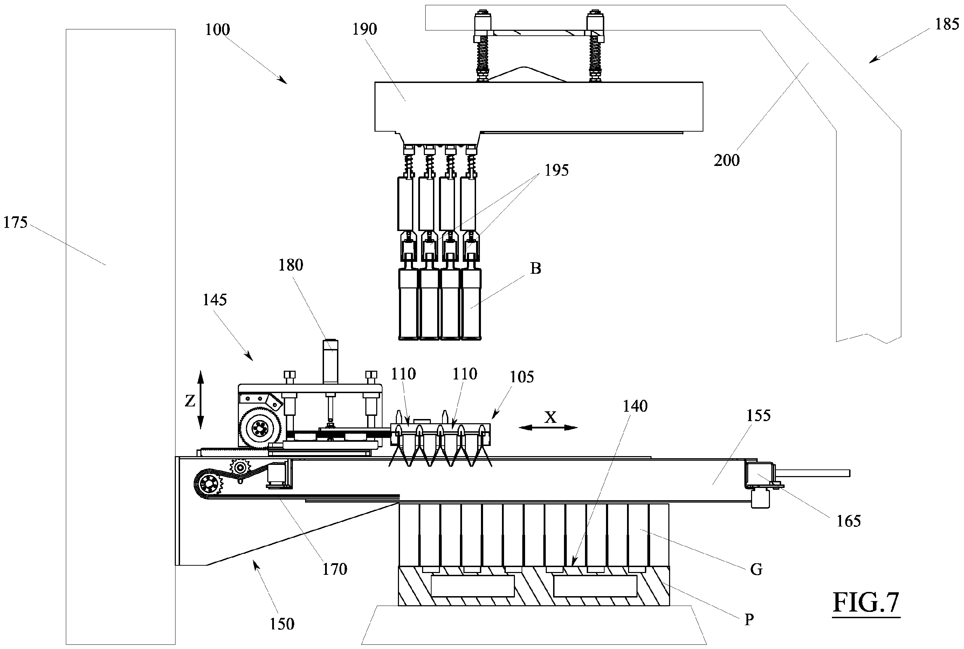

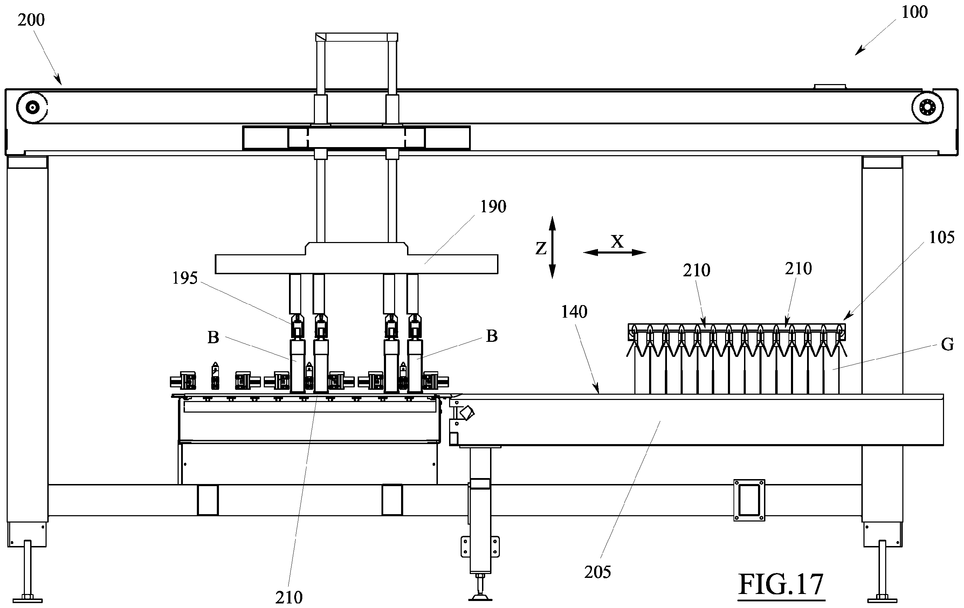

As shown for example in figure 7 and in figure 17, the centering device 105 previously outlined can be positioned one a resting surface 140 able to support the partition grid Gin which the bottles B have to be inserted.

In particular, the resting surface 140 can be able to receive supportingly one of the two major faces of the partition grid G, so that the axes of the containment cavities H are orthogonal to the resting surface 140 itself.

For example, the bearing surface 140 can be substantially horizontal, so that the axes of the containment cavities H are oriented substantially vertically.

The centering device 105 can be arranged so that the axes of the guide channels 110 are substantially orthogonal to the resting surface 140, so they can be parallel to the axes of the containment cavities H of the partition grid G.

Moreover, the centering device 105 can be arranged so that the projecting and tapered portions of the guide channels 110 are oriented towards the resting surface 104.

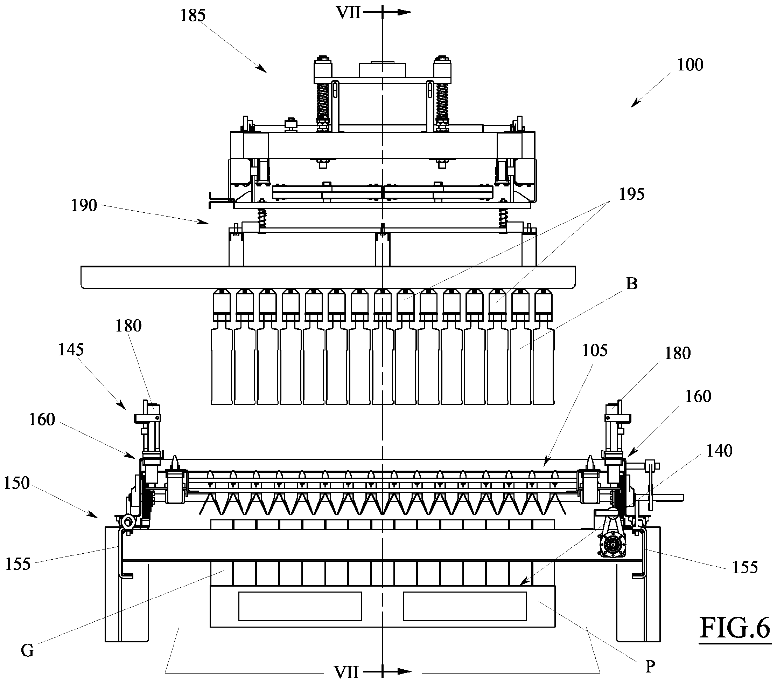

According to a first embodiment illustrated in figures 6 and 7, the resting surface 140 can be made available directly from the pallet P on which the bottles B have to be loaded.

The pallet P can in turn rest on a base or other support of the equipment 100 or possible on the ground.

The centering device 105 can be mounted on a trolley 145, which is coupled to a support frame 150 so as to be able to slide thereon in a direction X parallel to the resting surface 140 (for example horizontal).

As shown in figure 6, the supporting frame 150 can comprise two parallel longitudinal members 155, lying in a common plane substantially parallel to the resting surface 140 and mutually spaced apart, and the trolley 145 can comprise two movable units 160, which are individually coupled to a respective longitudinal member 155 so as to support the centering device 105 in the space included between the two longitudinal members 155.

In some embodiments, the support frame 150 can also comprise a cross-beam 165 that, connecting two ends of the longitudinal members 155, increases their stiffness (see fig. 7).

The actuation of the trolley 145 with respect to the supporting frame 150 can be obtained by means of any motorised actuation system, for example by means of a belt or chain driving system 170.

In other embodiments, the actuation of the trolley 145 could be obtained with a rack/pinion system or with any other system suitable for the purpose.

The supporting frame 150 can in turn be coupled to a support structure 175, which can be stably fixed to the ground, so as to be stationary with respect to the resting surface 140.

In particular, the support frame 150 can be coupled to this fixed support structure 175 so as to be movable thereon along a direction Z orthogonal to the resting surface 140 (for example vertical).

The actuation of the support frame 150 with respect to the fixed support structure 175 can be obtained by means of any motorised actuation system, for example by means of an additional chain or belt drive system (not shown in the figures).

In this way, thanks to the coordinated movement of the support frame 150 and of the trolley 145, the centering device 105 is movable both in the direction X and in the direction Z, to be positioned in the most appropriate way with respect to the partition grid G that is on the resting surface 140.

To further improve the positioning of the centering device 105, in some embodiments the centering device 105 is provided with one or more degrees of freedom also with respect to the trolley 145.

For example, the centering device 105 can be coupled with the trolley 145 so as to be able to further move aboard it in the direction X and/or in the direction Z.

In particular, an additional movement of the centering device 105 in the direction Z can be actuated for example by a pair of hydraulic or pneumatic cylinders 180 mounted aboard the two movable units 160.

The equipment 100 can also comprise handling members, indicated globally by the numeral 185, to carry the bottles B.

These handling members 185 can comprise an operating head 190 provided with a plurality of gripping devices 195, which are individually able to releasably hold a corresponding bottle B.

The gripping devices 195 can be of any type, for example pincers or inflatable elements.

The gripping devices 195 can be arranged in rows and can be spatially distributed complementarily to the guide channels 110 of the centering device 105.

The operating head 190 can be associated to a movement apparatus 200, for example an industrial robot with anthropomorphic arm, Cartesian or of any other type, which is able to move the operating head 190 between a loading position, in which the gripping devices 195 are able to pick up the bottles B to be palletized, and a releasing position, in which the gripping devices 195 release the bottles B in the partition grid G as will be explained in more detail hereafter.

The operation of the equipment 100 according to this first embodiment provides that, after setting the partition grid G on the resting surface 140 (specifically on the pallet P), the centering device 105 is superposed to the partition grid G and positioned so that each guide channel 110 is axially aligned with a corresponding empty containment cavity H (figure 7).

In the meantime, the operating head 190 is used to pick up from the loading position a certain number of bottles B and to align each of these bottles B above a corresponding guide channel 110.

Preferably, the number of bottles B picked up by the operating head 190 can be equal to the number of guide channels 110 made available by the centering device 105.

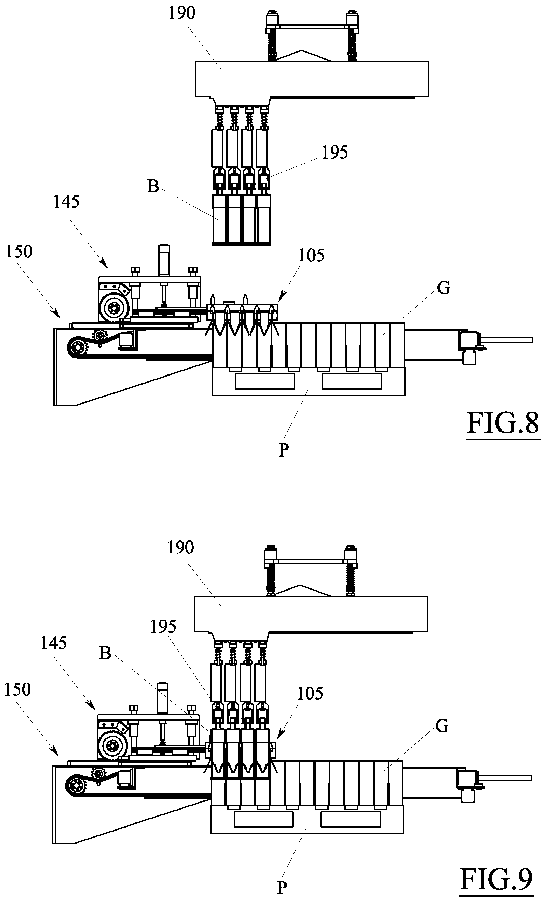

At this point, the centering device 105 can be moved in the direction Z so as to approach it to the partition grid G, preferably until the projecting and tapered portion of each guide channel 110 at least in part in the corresponding containment cavity H (figure 8).

The penetration of the guide channels 110 in the containment cavities H can be of a few centimeters (for example 2-3 cm).

Subsequently, the operating head 190 can be actuated so as also to move the bottles B in the direction Z, inserting each of them in the respective guide channel 110 of the centering device 105 and pushing it towards the resting surface 140 (figure 9). As a result of this movement, the bottles B come in contact with the lateral walls 130 of the guide channels 110 which, thanks in part to their tapered shape, guide them in perfect alignment with the containment cavities H of the partition grid G, adjusting for any small alignment errors between the cavities and the bottles B.

Proceeding with the insertion, the bottles B also have the effect of pushing the lateral walls 130 which, being yield, tend to spread radially, allowing the passage of the bottles B and their entry in the corresponding containment cavities H of the partition grid G.

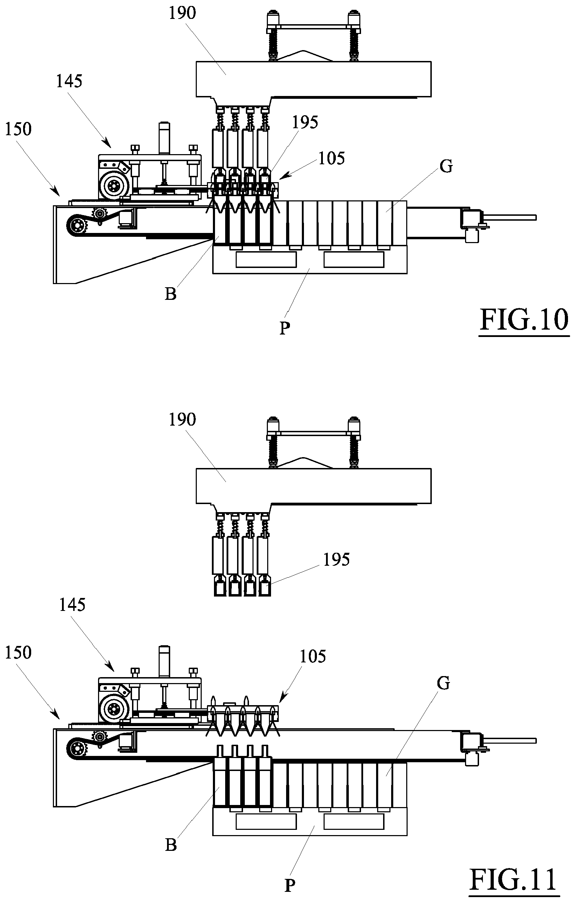

The descent of the operating head 190 ends when the bottles B come in contact with the resting surface 140 (fig. 10).

At this point, the gripping devices 195 release the bottles B and the operating head 190 is moved backwards along the direction Z, moving away from the centering device 105 and from the partition grid G (see fig. 11).

Concurrently, the centering device 105 is also moved in the direction Z away from the partition grid G, so as to remove the tapered portions of the guide channels 110 from the containment cavities H and bring them at such a distance as not to interfere with the bottles B that were released inside them.

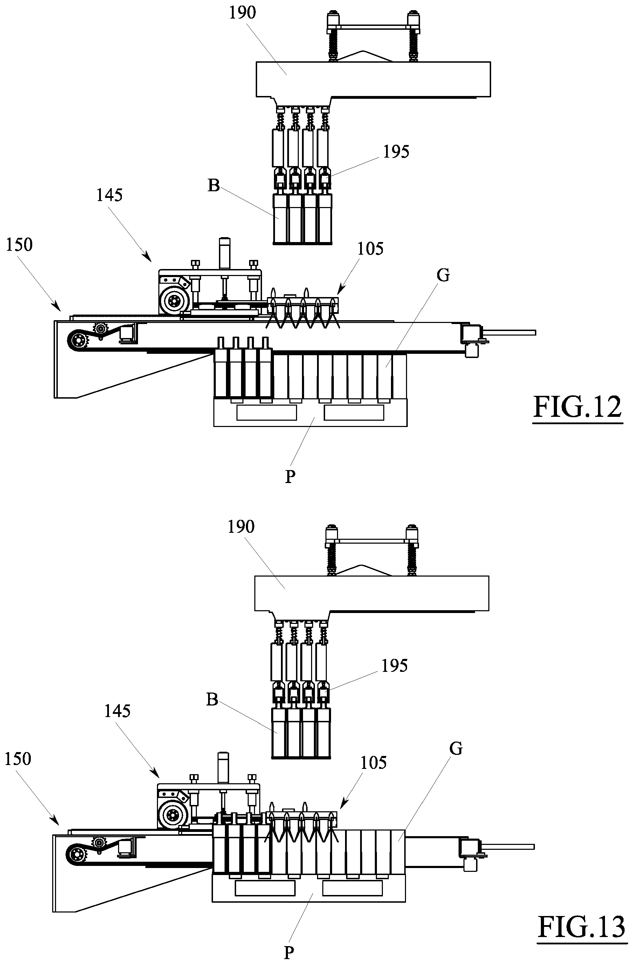

Since the number of guide channels 110 can be lower than the total number of containment cavities H, the centering device 105 can be moved in the direction X and positioned so that the guide channels 110 are aligned with an additional group of empty containment cavities H (fig. 12).

In the meantime the operating head 190 can pick up an additional group of bottles B and align them axially with the guide channels 110 of the centering device 105 that is in the new position.

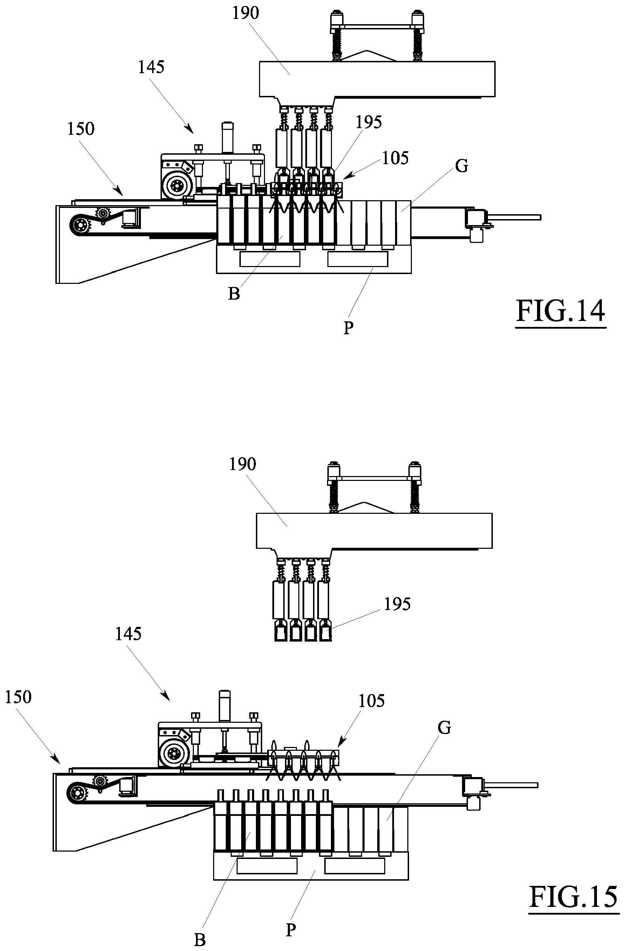

At this point, the centering device 105 is again moved in the direction Z, so as to insert the tapered portions of guide channels 110 in the containment cavities H of the partition grid G (fig. 13), whereupon the operating head 190 is also moved in the direction Z, so as to insert the bottles B first in the guide channels 110 and thence to the interior of the containment cavities H (fig. 14).

After releasing the bottles B on the resting surface 140, the operating head 190 and the centering device 105 are again moved away from the partition grid G in the direction Z (fig. 15).

The operating cycle repeats identically until the complete filling of all containment cavities H of the partition grid G with a respective bottle B, thereby obtaining a complete "layer" of mutually separated bottles B.

In other embodiments, the centering device 105 could have a number of guide channels 110 equal to or greater than the number of containment cavities H of the partition grid G. In this case, after the first positioning of the centering device 105 and differently from what is described above, the loading of the bottles B could take place with no need to reposition the centering device 105 multiple times, substantially with the same procedures that will be described below with respect to the second embodiment of figure 6 and 7.

Since in this embodiment, the resting surface 140 is directly defined by a pallet P, the palletization method can provide that over the "layer" of bottles B just formed is set down an additional partition grid G.

In particular, this additional partition grid G can be set down over a separating plate, for example made of cardboard or of plastic material, which is placed to rest on the previous "layer" of bottles B.

This separation plate and the additional partition grid G can be positioned in a manual or automated way.

Subsequently or previously, the centering device 105 can be moved in the direction Z so as to move it away from the resting surface 140 and to overlap it to the new empty partition grid G, which is then filled with bottles B with the same procedure described above, until the second "layer" is completed.

With the same procedure, on the second "layer" of bottles can be formed a third "layer" and so on until obtaining on the pallet P an ordered stack of bottles having the desired number of "layers".

When the stack is completed, the pallet P with the bottles B can be moved away from the equipment 100, for example to be stored or transported elsewhere, possibly after stabilising the "layers" of bottles B by winding with a belt of extensible film.

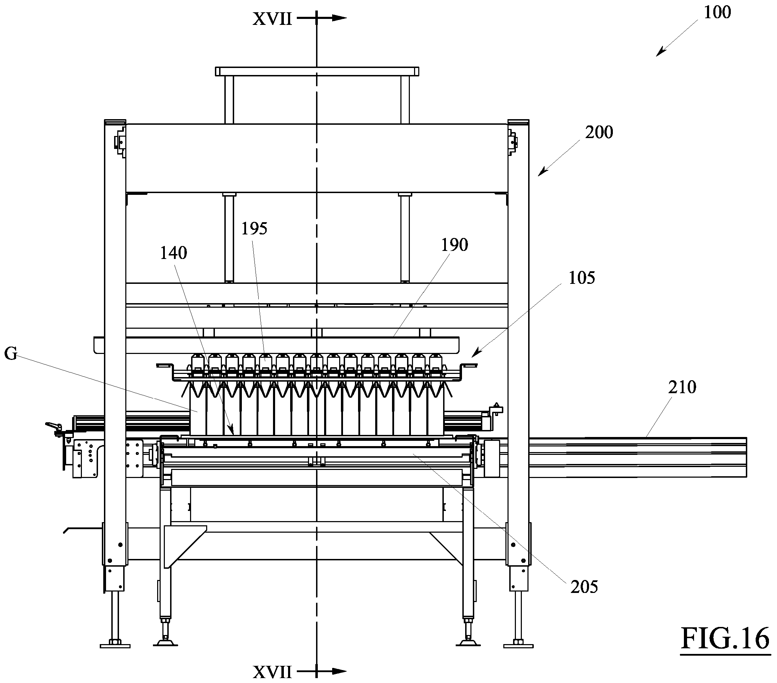

Figures 16 and 17 show an equipment 100 according to a second embodiment, in which the components in common with the first embodiment described above are indicated with the same numerical references and are not illustrated in detail, because they are considered to have the same features already described.

The main difference of this second embodiment is that the resting surface 140 for the partition grid G is made available from a supporting table 205.

The centering device 105 is positioned above the resting surface 140, with the portions projecting from the guide channels 110 oriented towards the resting surface 140.

The centering device 105 can be associated to appropriate movement members that are able to move it in a direction orthogonal Z and parallel X with respect to the resting surface 140.

These movement members are not illustrated but they can be similar to those described for the first embodiment or different, for example they can comprise an industrial robot with anthropomorphic arm, Cartesian, or of another type.

In this second embodiment (but this is theoretically applicable to the first embodiment as well), the centering device 105 can have a number of guide channels 110 equal to the number of containment cavities H of the partition grid G.

The operating head 190 is associated to a movement apparatus 200 that is able to move it between a loading position, in which the gripping devices 195 of the operating head 190 are able to pick up the bottles B to be palletized, and a release position, in which the gripping devices 195 release the bottles B in the partition grid G on the resting surface 140.

In the illustrated example, the movement apparatus 200 comprises a Cartesian industrial robot but in other embodiments the Cartesian robot can be replaced by a robot with anthropomorphic arm or by other systems.

The bottles B to be palletized can be carried to the loading position by one or more conveyor belts 210, on which the bottles can advance distributed in parallel rows. This solution for carrying the bottles B to the loading position is naturally also applicable to the equipment 100 of the first embodiment described previously. Correspondingly, the gripping devices 195 of the operating head 190 can also be distributed in parallel rows, so as to be able to pick up bottles B concurrently from multiple conveyor belts 210 in the loading position.

However, since the distance between the rows of bottles B on the conveyor belts 210 can be different from the distance between the rows of containment cavities H of the partition grid G, each row of gripping devices 195 can be coupled with the operating head 190 through sliding trolleys, so as to be able to move with respect to the other rows in a transverse direction, changing the mutual distance.

This degree of freedom of the gripping devices 195 is naturally also applicable to the equipment 100 of the first embodiment described previously.

The operation of this equipment 100 provides that the partition grid G is positioned on the resting surface 140 (specifically on the supporting table 205), so that the axes of the containment cavities H are orthogonal to the resting surface 140, for example vertical.

After setting down the partition grid G on the resting surface 140, the centering device 105 is overlapped to the partition grid G and positioned so that each guide channel 110 is axially aligned with a corresponding empty containment cavity H. Preferably, the centering device 105 can also be moved in the direction Z so as to insert the projecting and tapered portion of each guide channel 110 at least in part in the corresponding containment cavity H (figure 17).

The penetration of the guide channels 110 in the containment cavities H can be equal to the first embodiment.

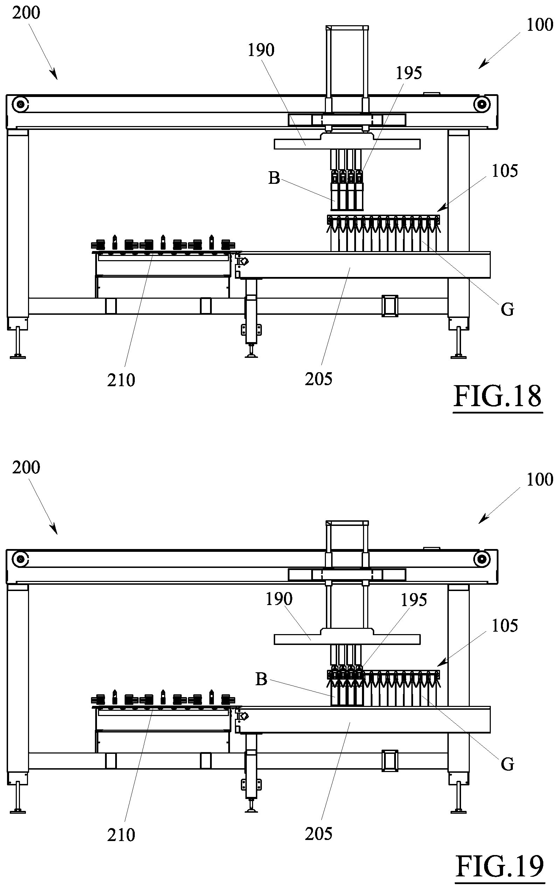

In the meantime, the operating head 190 is used to pick up from the loading position a certain number of bottles B and to align each of these bottles B above a corresponding guide channel 110 (fig. 18).

In this case, the number of bottles B picked up by the operating head 190 can be smaller than the number of guide channels 110 made available by the centering device 105.

At this point, the operating head 190 can be actuated so as also to move the bottles B in the direction Z, inserting each of them in the respective guide channel 110 of the centering device 105 and pushing it towards the resting surface 140 (figure 19) with the same procedures and with the same effects already described for the first embodiment.

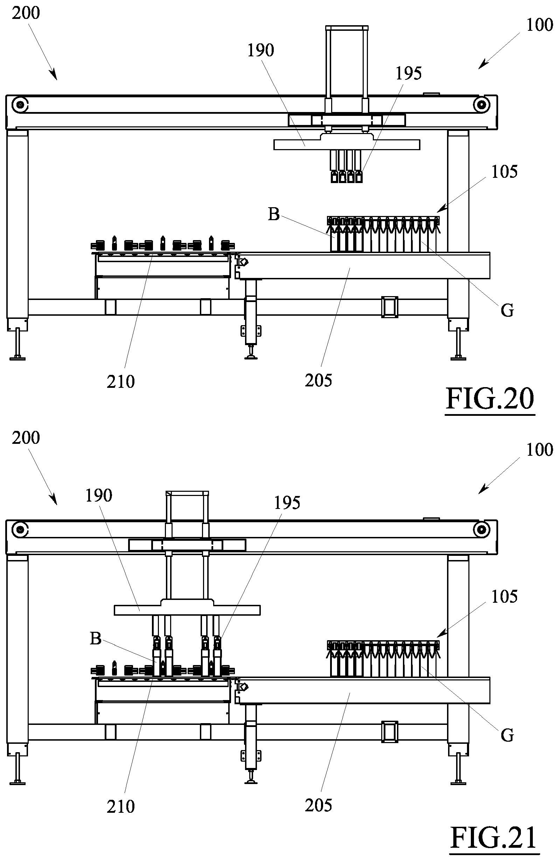

When the bottles B come in contact with the resting surface 140, the gripping devices 195 release the bottles B and the operating head 190 is moved backwards along the direction Z, moving away from the centering device 105 and from the partition grid G (fig. 20).

Since the number of guide channels 110 of the centering device 105 can be equal to the total number of containment cavities H of the partition grid G, the centering device 105 in this step can be maintained stationary in position.

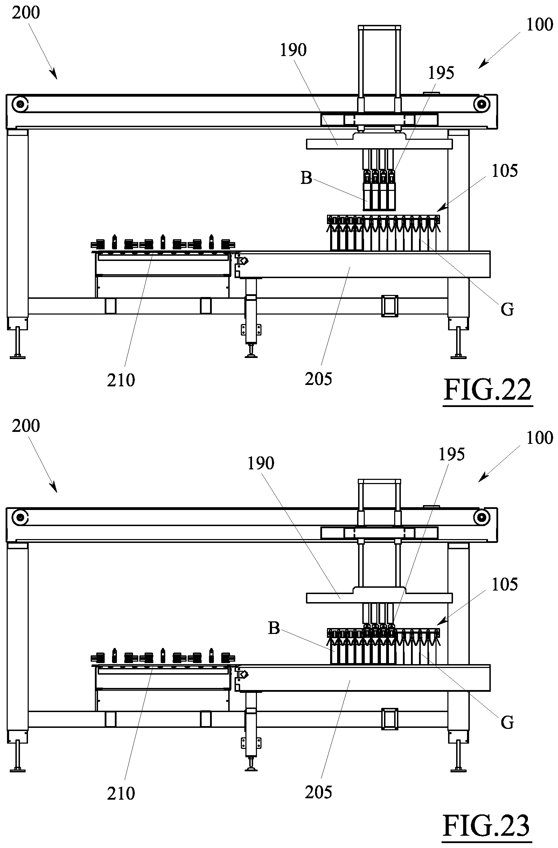

The operating head 190 can instead be used to pick up an additional group of bottles B (fig. 21) and to align them axially with the guide channels 110 of the centering device 105 that are superposed with an additional group of empty containment cavities (fig. 22).

At this point, the operating head 190 is again moved in the direction Z, so as to insert the new bottles B first in the guide channels 110 and thence to the interior of the containment cavities H (fig. 23).

After releasing the bottles B on the bearing surface 140, the operating cycle repeats identically until the complete filling of all containment cavities H of the partition grid G, thereby obtaining a complete "layer" of mutually separated bottles B.

When the "layer" is completed, the centering device 105 can also be moved in the direction Z away from the partition grid G, so as to remove the tapered portions of the guide channels 110 from the containment cavities H and bring them at such a distance as not to interfere with the bottles B that were released inside them.

Since in this embodiment, the resting surface 140 is defined by the supporting table 205, the palletization method can at this point provide for picking up the "layer" of bottles B that was just formed, including the partition grid G, and for transferring it above a pallet P (not shown), possibly stacking it to one or more previous "layers"

This transfer can be carried out manually or automatically by handling systems that are conventional in themselves and hence are not illustrated herein.

When the stack is completed, the pallet P with the bottles B can be moved away from the equipment 100, for example to be stored or transported elsewhere, possibly after stabilising the "layers" of bottles B by winding with a belt of extensible film.

Obviously, a person versed in the art may make numerous changes of a technical and applicative nature to the equipment 100 described above, without thereby departing from the scope of the invention as claimed below.

## Claims

1. An equipment (100) for the packaging of objects (B) comprising:
- - a resting surface (140) for a partition grid (G) defining a plurality of containment cavities (H) having axes orthogonal to the resting surface (140),
- - a centering device (105) arranged above the bearing surface (140) and provided with a plurality of guide channels (110) having axes orthogonal to the bearing surface (140),
- - first movement members (145) adapted to move said centering device (105) in a direction parallel to the resting surface (140), so as to be able to align each guide channel (110) with a corresponding containment cavity (H) of the partition grid (G), and
- - handling members (185) suitable for inserting an object (B) to be packed inside each guide channel (110) of the centering device (105), until it is inserted and released inside the corresponding containment cavity (H) of the partition grid (G).

2. An equipment (100) according to claim 1, wherein the resting surface (140) is a surface of a pallet (P).

3. An equipment (100) according to claim 1, wherein the resting surface (140) is a surface of a supporting table (205).

4. An equipment (100) according to any one of the preceding claims, comprising second movement members (175) suitable for moving the centering device (105) in a direction orthogonal to the resting surface (140).

5. An equipment (100) according to any one of the preceding claims, wherein each guide channel (110) of the centering device (105) comprises a tapered portion which narrows towards the resting surface (140).

6. An equipment (100) according to claim 5, wherein the tapered portion of each guide channel (110) is defined by at least one yielding wall (130).

7. An equipment (100) according to claim 6, wherein the tapered portion of each guide channel is defined by a plurality of yielding walls (130) radially arranged about the axis of the guide channel (110).

8. An equipment (100) according to any one of the preceding claims, wherein the first movement members comprise:
- - a trolley (145) adapted to carry the centering device (105),
- - a frame (150) suitable for carrying the trolley (145), and
- - actuating members adapted to actuate the trolley (145) so as to make it move relative to the frame (150) in a direction parallel to the resting surface (140).

9. An equipment (100) according to claims 3 and 8, wherein the second movement members comprise:
- - a fixed support structure (175) to which the frame (150) is coupled, and
- - actuating members adapted to actuate the frame (150) so as to make it move relative to the support structure (175) in a direction orthogonal to the resting surface (140).

10. An equipment (100) according to claim 8 or 9, wherein the frame (150) comprises at least two parallel longitudinal members (155), lying in a common plane substantially parallel to the resting surface (140) and mutually spaced apart.

11. An equipment (100) according to claim 10, wherein the trolley (145) comprises two units (160) individually coupled to a respective longitudinal member (155) of the frame (150), which units support the centering device (105) in the space between the two longitudinal members (155).

12. An equipment (100) according to any one of claims 8 to 11, comprising third movement members (180) able to move the centering device (105) with respect to the trolley (145) in a direction orthogonal to the resting surface (140).

13. An equipment (100) according to any one of the preceding claims, wherein the handling members (185) comprise an operating head (190) provided with a plurality of gripping devices (195) individually adapted to releasably retain a corresponding object (B) to be packed and a movement apparatus (200) adapted to move said operating head (190).

14. An equipment (100) according to claim 13, wherein the movement apparatus (200) of the operating head (190) is an industrial robot.

15. A method for the packaging of objects (B) comprising the steps of:
- - preparing a partition grid (G) defining a plurality of containment cavities (H) having axes parallel to each other,
- - overlapping the partition grid (G) with a centering device (105) provided with a plurality of guide channels (110) having axes parallel to each other,
- - positioning the centering device (105) so that each guide channel (110) is aligned with a corresponding containment cavity (H) of the partition grid (G),
- - inserting an object (B) to be packed inside each guide channel (110) of the centering device (105), until it is inserted inside the corresponding containment cavity (H) of the partition grid (G),
- - releasing each object (B) to be packed inside the corresponding containment cavity (H) of the partition grid (G), and
- - moving the centering device (105) away from the partition grid (G).

16. A method according to claim 15, comprising the step of axially inserting at least one portion of each guide channel (110) of the centering device (105) inside the corresponding containment cavity (H) of the partition grid (G).

17. A method according to claim 15 or 16, wherein the centering device (105) has a number of guide channels (110) lower than the number of containment cavities (H) of the partition grid (G) and, following the release step, the method provides for repositioning the centering device (105) so as to align each guide channel (110) with a further corresponding containment cavity (H) and subsequently repeat the insertion and release steps.
